# EUROPÄISCHE PATENTSCHRIFT

(11) **EP 4 169 754 B1**
(45) Veröffentlichungstag und Bekanntmachung des Hinweises auf die Patenterteilung: **19.06.2024**
(21) Anmeldenummer: 22200863.3
(22) Anmeldetag: 11.10.2022
(51) Int. Cl.: B60K 1/04, B60K 15/03, B62D 21/15, B60R 19/56, B62D 35/00

(54) **VERKLEIDETE CRASHSTRUKTUR FÜR ENERGIESPEICHER**
COVERED CRASH STRUCTURE FOR ENERGY STORAGE
STRUCTURE DE COLLISION REVÊTUE POUR ACCUMULATEUR D'ÉNERGIE

(30) Priorität: 25.10.2021 DE 102021127606
(43) Veröffentlichungstag der Anmeldung: 26.04.2023
(73) Patentinhaber: MAN Truck & Bus SE, 80995 München (DE)
(72) Erfinder: Schmitz, Andreas, 80995 München (DE)
(74) Vertreter: v. Bezold & Partner Patentanwälte - PartG mbB

(56) Entgegenhaltungen:
- EP-A2- 3 626 497
- WO-A1-2020/160747
- CN-A- 104 802 860

## Beschreibung

Die Erfindung betrifft eine Vorrichtung für ein Kraftfahrzeug, die einen Energiespeicher, eine Crashstruktur und Verkleidungsteile aufweist. Die Erfindung betrifft ferner ein Kraftfahrzeug mit dieser Vorrichtung.

Der Übergang von verbrennungsmotorisch angetriebenen Lastkraftwagen zu elektromotorisch angetriebenen Lastkraftwagen stellt die Hersteller vor vielfältige Herausforderungen. Ein besonderes Problem besteht in den hohen Stückkosten für die derzeit nur in sehr geringen Stückzahlen nachgefragten und hergestellten elektrisch angetriebenen Lastkraftwagen gegenüber den noch immer in sehr großen Mengen nachgefragten und hergestellten verbrennungsmotorisch angetriebenen Lastkraftwagen. Ein weiterer Problemkreis besteht in den hohen Entwicklungskosten für neue Lastkraftwagenteile und die Modifikation bestehender Lastkraftwagenteile zum Anpassen an Anforderungen der elektrisch angetriebenen Lastkraftwagen. Ein weiterer anderer Problemkreis besteht darin, dass in elektrisch angetriebenen Lastkraftwagen häufig Bauraumknappheit herrscht, da viele elektrische Komponenten, insbesondere des Hochvolt-Systems, vergleichsweise viel bzw. zusätzlichen Bauraum benötigen oder besonders geschützt werden müssen (z. B. Traktionsbatterie(n), Elektromotor(en), Bordladegerät, Ladesteckdose).

Die EP 3 626 497 A2 offenbart ein modular aufgebautes Nutzfahrzeug. Das Nutzfahrzeug weist ein Energiebereitstellungsmodul auf. Das Energiebereitstellungsmodul stellt elektrische Energie zum Antreiben einer elektrischen Antriebseinheit des Nutzfahrzeugs bereit. Das Energiebereitstellungsmodul weist einen Grundrahmen auf. An den Längsaußenseiten des Grundrahmens ist eine Crashstruktur angeordnet, die bei einem Seitenaufprall eines PKW unter vorbestimmter plastischer Deformation eine Aufprallenergie absorbiert.

WO2020/160747A1 offenbart einen LKW mit einer Crashstruktur, die die Längselemente und die Vertikalelemente umfasst.

Der Erfindung liegt die Aufgabe zu Grunde, eine verbesserte Vorrichtung zum Schutz eines Energiespeichers für ein Kraftfahrzeug zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Ein Aspekt der vorliegenden Offenbarung betrifft eine Vorrichtung für ein Kraftfahrzeug, vorzugsweise ein Nutzfahrzeug (z. B. Lastkraftwagen oder Omnibus). Das Kraftfahrzeug weist einen Energiespeicher, vorzugsweise eine Traktionsbatterie oder einen Kraftstofftank, auf. Das Kraftfahrzeug weist eine Crashstruktur auf, die profiliert ist, eine Außenseite des Energiespeichers schützend abdeckt (z. B. im Wesentlichen vollständig) und dazu ausgebildet ist, sich bei einem Aufprall unter Energieabbau vorbestimmt zu verformen. Das Kraftfahrzeug weist ein erstes (z. B. oberes) Verkleidungsteil auf, das streifenförmig ist, einen oberen (z. B. profilierten) streifenförmigen Abschnitt einer von dem Energiespeicher abgewandten (z. B. profilierten) Außenseite der Crashstruktur verkleidet und eine (z. B. durchgehend) planare (bzw. ebene oder glatte) Außenseite, die der Crashstruktur abgewandt ist, aufweist. Das Kraftfahrzeug weist ein zweites (z. B. unteres) Verkleidungsteil auf, das streifenförmig ist, einen unteren (z. B. profilierten) streifenförmigen Abschnitt der Außenseite der Crashstruktur verkleidet und eine (z. B. durchgehend) planare (bzw. ebene oder glatte) Außenseite, die der Crashstruktur abgewandt ist, aufweist.

Vorteilhaft ermöglicht die Vorrichtung, dass bei Verwendung einer profilierten Crashstruktur dennoch die Anforderungen an einen seitlichen Unterfahrschutz bzw. eine seitliche Schutzvorrichtung bei Lastkraftwagen usw. eingehalten werden können, ohne dass beispielsweise eine Seitenvollverkleidung zum Verkleiden der Außenseite des Energiespeichers verwendet wird. Die beiden streifenförmigen Verkleidungsteile können die profilierte Crashstruktur in den kritischen Abschnitten oben und unten verkleiden, sodass die planaren Außenseiten der Verkleidungsteile die Anforderungen an einen seitlichen Unterfahrschutz bzw. die seitliche Schutzvorrichtung erfüllen können. Die Anforderungen an den seitlichen Unterfahrschutz bzw. die seitliche Schutzvorrichtung bestehen, um ein Unterfahren zu erschweren und um zu verhindern, dass Fußgänger, Radfahrer und Motorradfahrer unter das Kraftfahrzeug geraten.

Vorzugsweise ist die Crashstruktur bzw. sind Profilbahnen der Crashstruktur dazu ausgebildet, sich derart vorbestimmt zu verformen, dass die Crashstruktur nicht penetriert wird, eine Penetrierung erschwert und/oder sich flächig an einer hinter der Crashstruktur angeordneten Struktur (z. B. Gehäuse des Energiespeichers) abstützt bzw. abstützen. Beispielsweise kann die vorbestimmte Verformung derart sein, dass sich die Crashstruktur bzw. die Profilbahnen innerhalb ihres Bauraums in sich selbst verformt bzw. verformen und dabei Crashenergie abbaut bzw. abbauen. Beispielsweise kann das vorbestimmte Verformen ein Eindrücken, ein Ausbeulen und/oder ein Verbiegen einer Profilbahn der Crashstruktur aufweisen.

In einem Ausführungsbeispiel weist das erste Verkleidungsteil und/oder das zweite Verkleidungsteil eine der Außenseite der Crashstruktur zugewandte Innenseite auf, die an die Crashstruktur angepasst ist. Vorteilhaft kann damit beispielsweise ein erforderlicher Bauraum verringert und eine Montage verbessert werden.

In einem weiteren Ausführungsbeispiel ist die planare Außenseite des ersten Verkleidungsteils und/oder die planare Außenseite des zweiten Verkleidungsteils im Wesentlichen in einer Vertikalebene mit oder zurückversetzt zu einer Dachfläche einer hervorstehenden Profilbahn (z. B. die mittlere und/oder größte und/oder am stärksten hervorstehende Profilbahn) der Crashstruktur. Vorteilhaft kann damit eine besonders flachbauende Vorrichtung erreicht werden.

In einem weiteren Ausführungsbeispiel ist die Innenseite des ersten Verkleidungsteils und/oder des zweiten Verkleidungsteils profiliert, vorzugsweise angepasst an die und/oder abwechselnd mit der Crashstruktur. Alternativ oder zusätzlich greift die Innenseite des ersten Verkleidungsteils und/oder des zweiten Verkleidungsteils und die Crashstruktur ineinander, wobei vorzugsweise eine Profilbahn der (jeweiligen) Innenseite zwischen zwei Profilbahnen der Crashstruktur angeordnet ist. Vorteilhaft kann damit erreicht werden, dass sich die Verkleidungsteile und die Crashstruktur gemeinsam Bauraum teilen können. Dadurch können die Verkleidungsteile gemeinsam mit der Crashstruktur vergleichsweise flach bzw. dünn bauen, sodass beispielsweise mehr Bauraum für den Energiespeicher zur Verfügung steht.

In einem weiteren Ausführungsbeispiel sind das erste Verkleidungsteil und das zweite Verkleidungsteil parallel, vertikal ausgerichtet, beabstandet zueinander angeordnet und/oder erstrecken sich im Wesentlichen entlang einer gesamten Länge der Außenseite der Crashstruktur.

In einem weiteren Ausführungsbeispiel weist die Vorrichtung ferner mindestens eine Halterung auf, die das erste Verkleidungsteil und/oder das zweite Verkleidungsteil an der Crashstruktur hält. Vorteilhaft kann damit eine einfache und sichere Montage der Verkleidungsteile gewährleistet sein.

In einem weiteren Ausführungsbeispiel ist das erste Verkleidungsteil und/oder das zweite Verkleidungsteil in die mindestens eine Halterung eingeschoben, vorzugweise mittels einer Schwalbenschwanzverbindung und/oder Kröpfungsverbindung, sodass bevorzugt eine flachbauende Kombination aus dem ersten und/oder zweiten Verkleidungsteil und der Crashstruktur bereitgestellt ist. Alternativ oder zusätzlich kann das erste Verkleidungsteil und/oder das zweite Verkleidungsteil an der mindestens einen Halterung eingehängt sein. Vorteilhaft kann auf diese Weise eine besonders einfache Montage und eine flachbauende Vorrichtung ermöglicht werden, die zugleich den Belastungen im Betrieb sicher standhalten kann.

In einer Ausführungsform deckt das erste Verkleidungsteil und/oder das zweite Verkleidungsteil die mindestens eine Halterung ab (z. B. in einer Ansicht auf die planare Außenseite des ersten Verkleidungsteils und/oder des zweiten Verkleidungsteils). Vorteilhaft kann damit erreicht werden, dass die Halterung von den Verkleidungsteilen geschützt werden kann. Es ist auch möglich, dass verletzungsgefährdende Kanten der Halterung abgedeckt werden können. Zudem kann die Halterung vor Witterungseinflüssen geschützt sein.

In einer weiteren Ausführungsform weist die mindestens eine Halterung mindestens eine Kröpfung, vorzugsweise mindestens zwei Kröpfungen in entgegengesetzte Richtungen (z. B. nach oben und nach unten und/oder abwechselnd), auf. Bevorzugt kann eine Kröpfung der jeweiligen Halterung mit dem ersten oder zweiten Verkleidungsteil ineinandergreifen und eine andere Kröpfung der jeweiligen Halterung das erste oder zweite Verkleidungsteils flächig abstützen (z. B. an einer vertikal ausgerichteten Außenfläche der (anderen) Kröpfung). Vorteilhaft kann mittels der Kröpfung(en) auf einfache Weise ein Einhängen und/oder Einschieben der Verkleidungsteile ermöglicht werden.

In einer weiteren Ausführungsform ist die mindestens eine Halterung in mindestens einem Talabschnitt angrenzend an eine Profilbahn der Crashstruktur oder zwischen zwei Profilbahnen der Crashstruktur angeordnet. Vorteilhaft kann die Halterung damit besonders bauraumgünstig positioniert und zudem durch die Crashstruktur geschützt angeordnet sein.

In einem Ausführungsbeispiel weist die Vorrichtung ferner mehrere Befestigungselemente, vorzugsweise eine Schraubenreihe, auf, die die Crashstruktur an dem Energiespeicher befestigt und/oder das erste Verkleidungsteil und/oder das zweite Verkleidungsteil an der Crashstruktur befestigt. Bevorzugt kann das erste Verkleidungsteil und/oder das zweite Verkleidungsteil die mehreren Befestigungselement, z. B. Schraubenköpfe der mehreren Befestigungselemente, (z. B. schützend) abdecken. Vorteilhaft stehen die Befestigungselemente damit nicht über, sodass keine Verletzungsgefahr bspw. für Fußgänger besteht und die Aerodynamik nicht negativ beeinflusst wird.

Vorzugsweise weist die Vorrichtung ferner mindestens ein Befestigungselement, vorzugsweise Schraube, auf, das die Crashstruktur an dem Energiespeicher befestigt und/oder das erste Verkleidungsteil und/oder das zweite Verkleidungsteil an der Crashstruktur befestigt. Bevorzugt kann das erste Verkleidungsteil und/oder das zweite Verkleidungsteil sich an einem Abschnitt, vorzugsweise einem Schraubenkopf (z. B. einer Stirnfläche des Schraubenkopfes), des mindestens einen Befestigungselements (z. B. direkt bzw. kontaktierend) im Crashfall abstützen, wenn das Verkleidungsteil auf die Crashstruktur gedrückt wird. Vorteilhaft kann damit im Crashfall eine sichere Abstützung und eine sichere Kraftableitung ermöglicht werden.

Es ist möglich, dass die Vorrichtung mindestens ein Befestigungselement, vorzugsweise eine Schraube aufweist, das das erste Verkleidungsteil oder das zweite Verkleidungsteil zusammen mit der Crashstruktur an dem Energiespeicher (z. B. einem Gehäuse davon) befestigt. Beispielsweise kann das mindestens eine Befestigungselement eine Halterung, die das erste oder zweite Verkleidungsteil hält, zusammen mit der Crashstruktur an dem Energiespeicher (z. B. einem Gehäuse davon) befestigen.

In einer weiteren Ausführungsvariante weist die Vorrichtung ferner mindestens ein weiteres Verkleidungsteil auf, das versetzt zu der Crashstruktur als eine Verlängerung des ersten Verkleidungsteils und/oder des zweiten Verkleidungsteils angeordnet ist (z. B. in oder entgegengesetzt zu einer Vorwärtsfahrtrichtung des Kraftfahrzeugs), streifenförmig ist und/oder eine planare Außenseite aufweist. Vorteilhaft kann damit ein durchgehender seitlicher Unterfahrschutz bzw. eine durchgehende seitliche Schutzvorrichtung beispielsweise für einen Lastkraftwagen geschaffen werden.

In einer weiteren Ausführungsvariante ist das mindestens eine weitere Verkleidungsteil als ein (z. B. seitlicher) Unterfahrschutz (bzw. eine seitliche Schutzvorrichtung) angeordnet, und/oder das mindestens eine weitere Verkleidungsteil ist in einer Ansicht auf die Außenseite der Crashstruktur versetzt neben der Außenseite der Crashstruktur angeordnet.

In einem weiteren Ausführungsbeispiel weist das mindestens eine weitere Verkleidungsteil ein drittes Verkleidungsteil, das als eine Verlängerung des ersten Verkleidungsteils angeordnet ist, und/oder ein viertes Verkleidungsteil, das als eine Verlängerung des zweiten Verkleidungsteils angeordnet ist, auf. Bevorzugt weist das mindestens eine weitere Verkleidungsteil ferner ein fünftes Verkleidungsteil, das auf einer zum dritten Verkleidungsteil entgegengesetzten Seite des ersten Verkleidungsteils als eine Verlängerung des ersten Verkleidungsteils angeordnet ist, und/oder ein sechstes Verkleidungsteil, das auf einer zum vierten Verkleidungsteil entgegengesetzten Seite des zweiten Verkleidungsteils als eine Verlängerung des zweiten Verkleidungsteils angeordnet ist, auf.

In einer Ausführungsvariante sind das erste Verkleidungsteil und das zweite Verkleidungsteil als Gleichteile ausgeführt. Vorteilhaft können damit die Herstellungskosten verringert und Fehlmontagen verhindert werden.

In einem weiteren Ausführungsbeispiel weist die Crashstruktur mehrere Profilbahnen auf, die vorzugsweise übereinander angeordnet sind, sich im Wesentlichen parallel zueinander erstrecken und/oder jeweils einen U-förmigen, V-förmigen oder wellenförmigen Querschnitt aufweisen, besonders bevorzugt in einer Ebene quer zu einer Längserstreckungsrichtung der mehreren Profilbahnen. Vorteilhaft kann die Crashstruktur damit besonders wirkungsvoll Crashlasten abbauen.

Vorzugsweise kann eine auf im Wesentlichen mittlerer Höhe der Crashstruktur angeordnete Profilbahn der mehreren Profilbahnen die breiteste, höchste und/oder am stärksten herausstehende Profilbahn der mehreren Profilbahnen sein.

Ein weiterer Aspekt der vorliegenden Offenbarung betrifft ein Kraftfahrzeug, vorzugsweise Nutzfahrzeug (z. B. Lastkraftwagen (vorzugsweise Chassisfahrzeug bzw. mit Aufbau) oder Omnibus). Das Kraftfahrzeug weist eine Vorderachse, eine Hinterachse, einen Fahrzeugrahmen, vorzugsweise Leiterrahmen, und eine Vorrichtung wie hierin offenbart auf. Die Vorrichtung kann beispielsweise zwischen der Vorderachse und der Hinterachse angeordnet sein und/oder an dem Fahrzeugrahmen befestigt sein, vorzugsweise auf einer Höhe mit der Vorderachse und der Hinterachse.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine rein schematische Seitenansicht eines Kraftfahrzeugs gemäß einem Ausführungsbeispiel der vorliegenden Offenbarung;
- Figur 2: eine perspektivische Ansicht eines Abschnitts einer Außenseite eines Kraftfahrzeugs zwischen einer Vorderachse und einer Hinterachse des Kraftfahrzeugs;
- Figur 3: eine Draufsicht von oben auf einen Abschnitt einer Außenseite eines Kraftfahrzeugs zwischen einer Vorderachse und einer Hinterachse des Kraftfahrzeugs;
- Figur 4: eine perspektivische Rückansicht eines Abschnitts einer Längsseite eines Kraftfahrzeugs;
- Figur 5: eine perspektivische Ansicht einer Crashstruktur mit Halterungen für Verkleidungsteile;
- Figur 6: eine perspektivische Ansicht eines obersten Abschnitts der Crashstruktur von Figur 5;
- Figur 7: eine perspektivische Ansicht eines oberen Abschnitts der Crashstruktur von Figur 5;
- Figur 8: eine perspektivische Ansicht einer verkleideten Crashstruktur;
- Figur 9: eine Querschnittansicht durch eine Crashstruktur und einen Abschnitt eines Energiespeichers; und
- Figur 10: eine Querschnittansicht durch eine verkleidete Crashstruktur und einen Abschnitt eines Energiespeichers.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

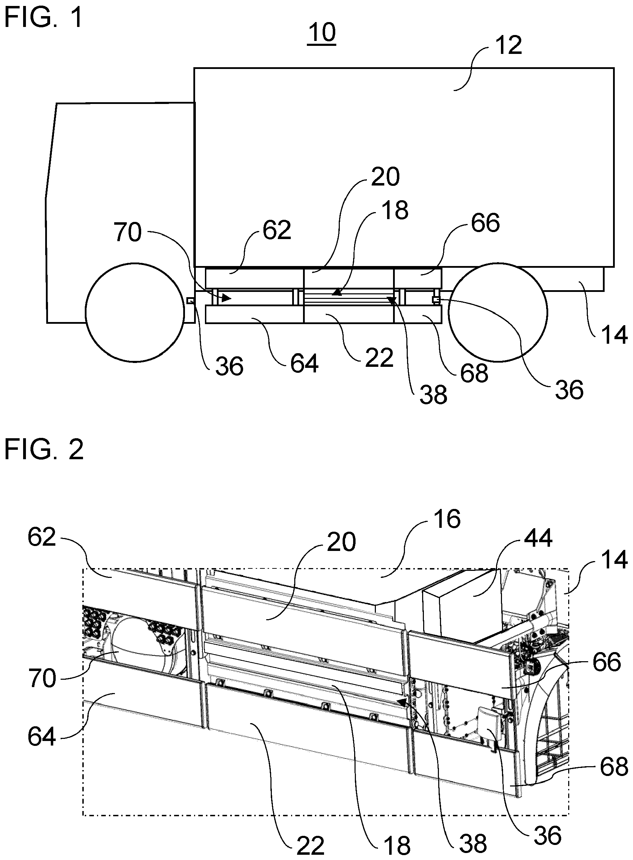

Die Figur 1 zeigt ein Kraftfahrzeug 10. Die Figuren 2 bis 4 zeigen Abschnitte einer Längsaußenseite des Kraftfahrzeugs 10 in unterschiedlichen Ansichten.

Das Kraftfahrzeug 10 ist vorzugsweise als ein Lastkraftwagen ausgeführt, wie dargestellt ist. Der Lastkraftwagen ist bevorzugt als ein sogenanntes Chassisfahrzeug ausgeführt bzw. weist einen Aufbau 12, z. B. Ladeaufbau, auf. Alternativ kann der Lastkraftwagen beispielsweise eine Sattelkupplung zum Ankuppeln eines Sattelaufliegers aufweisen (nicht in Figur 1 dargestellt). Es ist möglich, dass das Kraftfahrzeug 10 beispielsweise als ein Omnibus, eine Baumaschine oder eine Landmaschine ausgebildet ist. Es ist auch möglich, dass das Kraftfahrzeug 10 nicht als Nutzfahrzeug ausgeführt ist, sondern beispielsweise als ein Personenkraftwagen (Pkw).

Das Kraftfahrzeug 10 kann einen Fahrzeugrahmen 14 aufweisen. Der Aufbau 12 oder Sattelauflieger kann auf dem Fahrzeugrahmen 14 abgestützt sein. Der Fahrzeugrahmen 14 kann bevorzugt als ein Leiterrahmen ausgeführt sein. Der Leiterrahmen kann beispielsweise zwei im Wesentlichen parallele Hauptlängsträger aufweisen. Die beiden Hauptlängsträger können durch mehrere Querträger miteinander verbunden sein. Die mehreren Querträger können entlang einer Längsachse des Kraftfahrzeugs 10 voneinander beabstandet sein. Alternativ kann der Fahrzeugrahmen 14 beispielsweise als ein Gitterrahmen ausgeführt sein, z. B. bei einer Ausführung des Kraftfahrzeugs 10 als ein Lastkraftwagen oder ein Omnibus.

Das Kraftfahrzeug 10 ist bevorzugt elektrisch antreibbar. Beispielsweise kann das Kraftfahrzeug 10 mittels eines zentralen Elektroantriebs antreibbar sein. Der zentrale Elektroantrieb kann beispielsweise unterhalb eines Fahrerhauses und/oder zwischen den beiden Hauptlängsträgern des Fahrzeugrahmens 14 angeordnet sein. Alternativ kann das Kraftfahrzeug 10 beispielsweise mittels mehrerer Elektroradnabenantriebe oder mehrerer radnaher Elektroantriebe angetrieben sein.

Das Kraftfahrzeug 10 weist mindestens einen Energiespeicher 16 und eine Crashstruktur 18 auf. Das Kraftfahrzeug 10 weist ferner ein erstes Verkleidungsteil 20 und ein zweites Verkleidungsteil 22 auf.

Der Energiespeicher 16 kann beispielsweise als ein Kraftstofftank (z. B. Drucktank) zum Speichern von Kraftstoff, z. B. Diesel, Benzin, Wasserstoff, Brenngas usw., ausgeführt sein. Der Kraftstofftank kann zum Zuführen des Kraftstoffs mit einer Antriebseinheit des Kraftfahrzeugs 10 verbunden sein. Der Energiespeicher 16 ist jedoch vorzugsweise als eine Traktionsbatterie zum Speichern von elektrischer Energie ausgeführt. Die Traktionsbatterie kann beispielsweise extern über ein an einer Ladesteckdose des Kraftfahrzeugs 10 angeschlossenes elektrisches Ladekabel geladen werden. Die Traktionsbatterie kann mindestens einen elektrischen Antrieb des Kraftfahrzeugs 10 mit elektrischer Energie versorgen.

Der Energiespeicher 16 kann verdeckt hinter der Crashstruktur 18 angeordnet sein. Eine Außenseite bzw. eine weg von dem Fahrzeugrahmen 14 gewandte (z. B. Längs-) Seite des Energiespeichers 16 kann von der Crashstruktur 18 geschützt sein, z. B. bei einem Seitenaufprall auf die Crashstruktur 18. Beispielsweise kann der Energiespeicher 16 (z. B. bezüglich einer Querachse des Kraftfahrzeugs 10) zwischen dem Fahrzeugrahmen 14 und der Crashstruktur 18 angeordnet sein. Der Energiespeicher 16 kann zwischen einer Vorderachse und einer Hinterachse des Kraftfahrzeugs 10 angeordnet sein.

Der Energiespeicher 16 kann an dem Fahrzeugrahmen 14 angebracht sein, vorzugsweise an einer Außenlängsseite eines der Hauptlängsträger des Fahrzeugrahmens 14. Die Crashstruktur 18 kann an dem Energiespeicher 16 getragen bzw. angebracht sein, vorzugsweise an einer (z. B. Längs-) Seitenfläche des Energiespeichers 16, die weg von dem Fahrzeugrahmen 14 bzw. nach außen gerichtet ist. Die Crashstruktur 18 kann an einem Gehäuse des Energiespeichers 16 befestigt sein, z. B. mittels Verschraubung.

Die Crashstruktur 18 ist dazu ausgebildet, sich unter Energieabbau bei einem Aufprall vorbestimmt zu verformen, um Crashenergie abzubauen. Vorzugsweise kann die Crashstruktur 18 dazu ausgebildet sein, sich bei einem Seitenaufprall auf die Crashstruktur 18 und/oder die Verkleidungsteile 20, 22 unter Energieabbau vorbestimmt plastisch zu verformen.

Die Crashstruktur 18 kann zwischen einer Vorderachse und einer Hinterachse des Kraftfahrzeugs 10 angeordnet sein. Die Crashstruktur 18 kann einen Abschnitt einer Längsseite (z. B. Fahrerlängsseite oder Beifahrerlängsseite) des Kraftfahrzeugs 10 vor Aufprallenergie schützend verkleiden. Die Crashstruktur 18 kann bezüglich einer Vorwärtsfahrtrichtung des Kraftfahrzeugs 10 hinter einem Kotflügel für die Vorderachse und/oder vor einem Kotflügel für die Hinterachse angeordnet sein.

Die Crashstruktur 18 deckt eine Außenseite bzw. Außenlängsseite des Energiespeichers 16 schützend ab. Die Crashstruktur 18 kann eine Außenlängsseite des Energiespeichers 16 im Wesentlichen vollständig abdecken bzw. schützen. Vorzugsweise kann sich die Crashstruktur 18 im Wesentlichen über eine gesamte Höhe und/oder Länge (bezüglich einer Längsachse des Kraftfahrzeugs 10) des Energiespeichers 16 erstrecken.

Die Crashstruktur 18 kann sich im Wesentlichen parallel zu einer Längsachse des Kraftfahrzeugs 10 erstrecken. Vorzugsweise ist die Crashstruktur 18 auf Höhe einer Vorderachse, einer Hinterachse und/oder des Fahrzeugrahmens 14 des Kraftfahrzeugs 10 angeordnet. Vorteilhaft ist die Crashstruktur 18 vertikal ausgerichtet. Besonders bevorzugt liegt die Crashstruktur 18 in einer vertikalen Ausrichtungsebene, die beispielsweise parallel zu einer Längsachse des Kraftfahrzeugs 10 verläuft bzw. senkrecht zu einer Querachse des Kraftfahrzeugs 10 verläuft.

Die Crashstruktur 18 ist bevorzugt im Wesentlichen plattenförmig und/oder rechteckförmig. Die Crashstruktur 18 kann als eine Crashbeplankung ausgeführt sein. Die Crashstruktur 18 kann bevorzugt als ein Rollprofil, ein Strangprofil oder ein Pressteil ausgeführt sein.

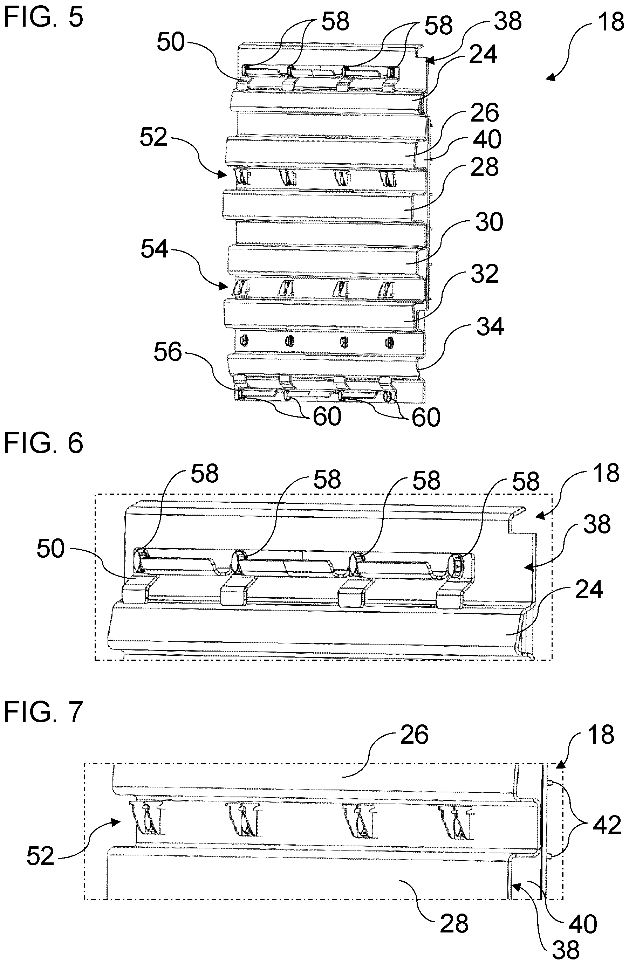

Die Crashstruktur 18 ist profiliert, wie nachfolgend im Detail anhand der Figur 5 näher erläutert ist.

Die Crashstruktur 18 kann vorzugsweise mehrere Profilbahnen 24, 26, 28, 30, 32, 34 aufweisen. Die Profilbahnen 24, 26, 28, 30, 32, 34 können bevorzugt übereinander angeordnet sein. Möglich ist beispielsweise auch eine Nebeneinanderanordnung. Bevorzugt sind die Profilbahnen 24, 26, 28, 30, 32, 34 horizontal ausgerichtet. Die Profilbahnen 24, 26, 28, 30, 32, 34 können sich bei einem Aufprall unter Energieabbau vorbestimmt verformen, um dadurch beispielsweise den Energiespeicher 16 zu schützen.

Die Profilbahnen 24, 26, 28, 30, 32, 34 sind bevorzugt parallel zueinander. Die Profilbahnen 24, 26, 28, 30, 32, 34 können beispielsweise parallel zu einer Längsachse des Kraftfahrzeugs 10 bzw. der Crashstruktur 18 verlaufen. Es ist möglich, dass die Crashstruktur 18 mehr oder weniger als die sechs Profilbahnen 24, 26, 28, 30, 32, 34 aufweist, z. B. zwei, drei, vier, fünf, sieben, acht usw. Profilbahnen.

Die Profilbahnen 24, 26, 28, 30, 32, 34 können beispielsweise einen U-förmigen, V-förmigen oder wellenförmigen Querschnitt in einer Ebene, die quer zu einer Längserstreckungsrichtung der mehreren Profilbahnen 24, 26, 28, 30, 32, 34 ist, aufweisen.

Die Profilbahnen 24, 26, 28, 30, 32, 34 können zumindest teilweise unterschiedlich breit sein, wobei eine Breite der Profilbahnen 24, 26, 28, 30, 32, 34 bezüglich einer Querachse der Crashstruktur 18 bzw. des Kraftfahrzeugs 10 gemessen wird. Die Querachse kann senkrecht zur bevorzugt vertikalen Ausrichtungsebene der Crashstruktur 18 verlaufen.

Die oberste Profilbahn 24 kann weniger breit sein als die obere Profilbahn 26. Die obere Profilbahn 26 kann weniger breit sein als die mittlere Profilbahn 28. Die mittlere Profilbahn 28 kann die breiteste Profilbahn der Profilbahnen 24, 26, 28, 30, 32, 34 sein. Die untere Profilbahn 32 kann breiter sein als die unterste Profilbahn 34.

Allgemein kann die Crashstruktur 18 in einem mittigen Abschnitt der Crashstruktur 18 gegenüber einem oberen Abschnitt der Crashstruktur 18 und/oder einem unteren Abschnitt der Crashstruktur 18 verstärkt und/oder verbreitert sein. Der obere Abschnitt kann die obere Profilbahn 24 und/oder 26 aufweisen. Der mittlere Abschnitt kann die mittlere Profilbahn 28 und/oder 30 aufweisen. Der untere Abschnitt kann die untere Profilbahn 32 und/oder 34 aufweisen. Der mittige Abschnitt kann zwischen dem oberen Abschnitt und dem unteren Abschnitt angeordnet sein. Eine wirksame Breite und/oder Profilierung der Crashstruktur 18 kann in einem mittigen Abschnitt am größten sein. Die wirksame Breite kann sich auf die jeweilige Maximalbreite der Profilbahn(en) im jeweiligen Abschnitt der Crashstruktur 18 beziehen.

Die Dachflächen der Profilbahnen 24, 26, 28, 30, 32, 34 können weg von dem Energiespeicher 16 gewandt sein. Die Dachfläche der oberen Profilbahn 24 und/oder 26 kann schräg abfallen, sodass die Breite der oberen Profilbahn 24 und/oder 26 in einer Vertikalrichtung nach oben abnimmt. Die Dachfläche der mittleren Profilbahn 28 und/oder 30 kann eine im Wesentlichen gleichbleibende Breite aufweisen und vorzugsweise vertikal ausgerichtet sein. Die Dachfläche der unteren Profilbahn 32 und/oder 34 kann schräg abfallen, sodass die Breite der unteren Profilbahn 32 und/oder 34 in einer Vertikalrichtung nach unten abnimmt. Eine solche Ausführung kann eine bauraumgünstige Montage der Verkleidungsteile 20, 22 an der Crashstruktur 18 ermöglichen. Es ist auch möglich, dass die Crashstruktur 18 auf diese Weise nach oben und unten hin an die dort potentiell geringeren Crashlasten angepasst ist.

Es ist möglich, dass eine der Profilbahnen 24, 26, 28, 30, 32, 34 auf Höhe mindestens eines Umgebungserfassungssensors 36 (siehe Figuren 1 und 2) des Kraftfahrzeugs 10 angeordnet ist. Beispielsweise ist in einer Zusammenschau der Figur 1, 2 und 5 ein Ausführungsbeispiel der Crashstruktur 18 gezeigt, bei der die Profilbahn 30 (siehe Figur 5) im Wesentlichen auf einer Höhe mit dem mindestens einen Umgebungserfassungssensor 36 angeordnet ist.

Der Umgebungserfassungssensor 36 kann an einem Kotflügel des Kraftfahrzeugs 10 angebracht sein, vorzugsweise an dem Kotflügel einer Vorderachse oder Hinterachse des Kraftfahrzeugs 10. Der Umgebungserfassungssensor 36 kann eine Umgebung, vorzugsweise einen toten Winkel, des Kraftfahrzeugs 10 erfassen. Beispielsweise kann der Umgebungserfassungssensor 36 Signale ausgeben, die von einem Abbiegeassistenzsystems und/oder einem Toter-Winkel-Überwachungssystem des Kraftfahrzeugs 10 ausgewertet werden. Beispielsweise kann der Umgebungserfassungssensor 36 in und/oder entgegen einer Vorwärtsfahrtrichtung des Kraftfahrzeugs 10 gerichtet sein. Vorzugsweise kann der Umgebungserfassungssensor 36 mindestens einen Radarsensor aufweisen.

Die Profilbahn 30 auf Höhe des Umgebungserfassungssensors 36 kann so ausgeführt sein, dass ein Sichtbereich (z. B. ein Sichtkegel) bezüglich des Umgebungserfassungssensors 36 von der Profilbahn 30 freigegeben bzw. nicht beeinträchtigt ist. Das Sichtfeld kann entlang der Crashstruktur 18, insbesondere entlang der Profilbahn 30, verlaufen. Bevorzugt kann beispielsweise eine Dachfläche der Profilbahn 30 relativ zu der darüber angeordneten Profilbahn 28 und relativ zu der darunter angeordneten Profilbahn 32 zurückversetzt sein. Besonders bevorzugt kann beispielsweise eine Dachfläche der Profilbahn 30 gegenüber dem Umgebungserfassungssensor 36 zurückversetzt sein, z. B. bezüglich einer Querachse des Kraftfahrzeugs 10.

Nachfolgend ist erneut insbesondere auf die Figuren 1 bis 4 Bezug genommen.

Es ist möglich, dass der Energiespeicher 16 mehrere übereinander angeordnete Batteriemodule aufweist. Beispielsweise weist der Energiespeicher 16 vier übereinander angeordnete Batteriemodule auf. Die Crashstruktur 18 kann so mit dem Energiespeicher 16 verbunden sein, dass sie die mehreren Batteriemodule des Energiespeichers 16 zusammenhält. Beispielsweise kann die Crashstruktur 18 an den mehreren Batteriemodulen des Energiespeichers 16 angebracht bzw. befestigt sein, z. B. an jeweiligen Gehäusen der Batteriemodule.

Die Crashstruktur 18 kann direkt an den Batteriemodulen befestigt, z. B. verschraubt, sein. Alternativ oder zusätzlich kann zwischen der Crashstruktur 18 und den Batteriemodulen des Energiespeichers 16 mindestens eine Befestigungsleiste angeordnet sein (nicht dargestellt). Die Befestigungsleiste ist bevorzugt vertikal ausgerichtet. Die Befestigungsleiste kann an den mehreren Batteriemodulen des Energiespeichers 16 angebracht bzw. befestigt sein, z. B. an jeweiligen Gehäusen der Batteriemodule. Die Befestigungsleiste kann bevorzugt mit den Batteriemodulen verschraubt sein. Die Befestigungsleiste kann die mehreren Batteriemodule zusammenhalten. Die Crashstruktur 18 kann über die Befestigungsleiste an den Batteriemodulen angebracht sein, vorzugsweise mittels Schraubverbindung(en).

Es ist möglich, dass mindestens ein Abschnitt 38 der Crashstruktur 18 entlang einer Längsachse der Crashstruktur 18 bzw. entlang einer Längserstreckungsrichtung der Profilbahnen 24, 26, 28, 30, 32, 34 über den Energiespeicher 16 übersteht. Die Figuren 2 bis 4 zeigen beispielhaft den überstehenden Abschnitt 38, der entgegen einer Vorwärtsfahrtrichtung des Kraftfahrzeugs 10 über den Energiespeicher 16 übersteht, also beispielsweise nahe der Hinterachse des Kraftfahrzeugs 10. Alternativ oder zusätzlich ist es beispielsweise auch möglich, dass ein überstehender Abschnitt, der in der Vorwärtsfahrtrichtung des Kraftfahrzeugs 10 über den Energiespeicher 16 übersteht, also beispielsweise nahe der Vorderachse des Kraftfahrzeugs 10, umfasst ist.

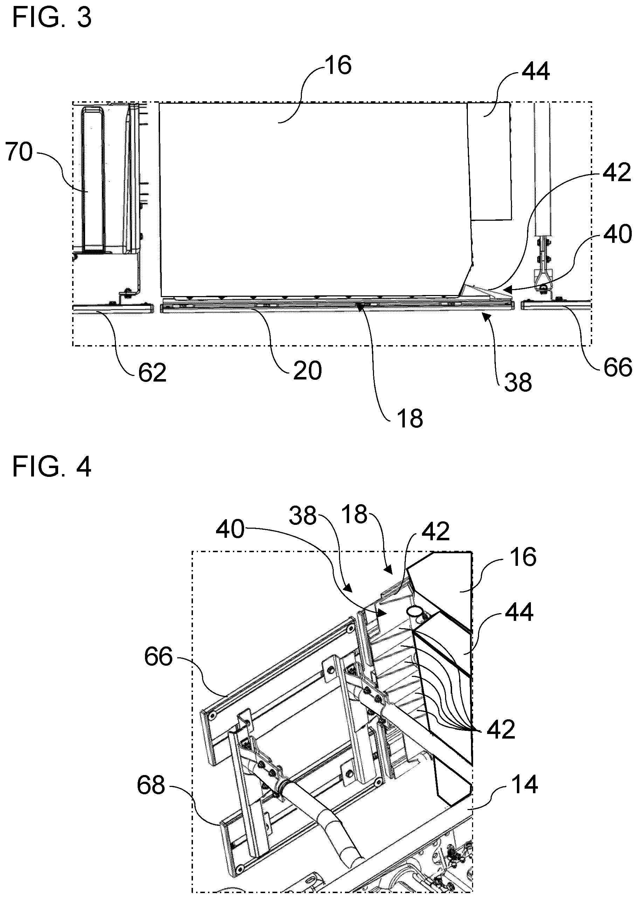

Wie insbesondere in den Figuren 3 und 4 dargestellt ist, kann eine Stützkonstruktion 40 zwischen dem überstehenden Abschnitt 38 und dem Energiespeicher 16 angeordnet sein. Der überstehende Abschnitt 38 kann an der Stützkonstruktion 40 angebracht sein, vorzugsweise mittels Schraubverbindung(en). Die Stützkonstruktion 40 kann eine Rückseite bzw. eine dem Fahrzeugrahmen 14 zugewandte Seite des überstehenden Abschnitts 38 an dem Energiespeicher 16 abstützen. Vorzugsweise stützt die Stützkonstruktion 40 den überstehenden Abschnitt 38 an einer entgegengesetzt zur Vorwärtsfahrtrichtung des Kraftfahrzeugs 10 gewandten Außenseite des Energiespeichers 16 ab, besonders bevorzugt mittels mehrerer Rippen 42. Die Rippen 42 können übereinander angeordnet sein. Die Rippen 42 können parallel zueinander sein. Die Rippen 42 können beispielsweise in Form von Dreiecksblechen ausgeführt sein. Die Rippen 42 können die Stützkonstruktion 40 zusätzlich versteifen. Die Stützkonstruktion 40 kann als eine Schweißkonstruktion oder Gusskonstruktion ausgeführt sein.

Die Stützkonstruktion 40 kann bevorzugt zusammen mit dem überstehenden Abschnitt 38 der Crashstruktur 18 mindestens ein (z. B. elektrisches) Gerät 44 schützend abdecken. Das mindestens eine Gerät 44 kann an einer entgegengesetzt zur Vorwärtsfahrtrichtung des Kraftfahrzeugs 10 gewandten Außenseite des Energiespeichers 16 angeordnet sein. Das mindestens eine Gerät 44 kann beispielsweise an dem Energiespeicher 16 getragen und/oder angebracht sein, z. B. an einem Gehäuse des Energiespeichers 16. Beispielsweise kann das mindestens eine Gerät 44 an der entgegengesetzt zur Vorwärtsfahrtrichtung gewandten Außenseite des Energiespeichers 16 getragen und/oder angebracht sein, z. B. mittels Schraubverbindung(en).

Alternativ oder zusätzlich zur Stützkonstruktion 40 kann eine Stützkonstruktion zwischen einem in Vorwärtsfahrtrichtung über den Energiespeicher 16 überstehenden Abschnitt der Crashstruktur 18 und dem Energiespeicher 16 angeordnet sein (nicht dargestellt). Diese Stützkonstruktion kann prinzipiell wie die erläuterte Stützkonstruktion 40 ausgeführt sein. Diese Stützkonstruktion kann beispielsweise ein (z. B. elektrisches) Gerät an einer in Vorwärtsfahrrichtung gewandten Außenseite des Energiespeichers 16 schützend abdecken.

Das mindestens eine Gerät 44 kann vorzugsweise mindestens eine Hochvolt-Komponente sein, die vorzugsweise mit Wechselspannungen über 30 V bis beispielsweise 1 kV oder mit Gleichspannungen über 60 V bis beispielsweise 1,5 kV betrieben wird. Beispielsweise kann das mindestens eine Gerät 44 eine (z. B. Hochvolt-) Steuereinheit, vorzugweise eine Ladesteuereinheit zum Steuern eines Ladevorgangs des Energiespeichers 16, aufweisen. Das mindestens eine elektrische Gerät 44 kann alternativ oder zusätzlich eine elektrische (z. B. Hochvolt-) Sicherheitseinrichtung aufweisen. Die elektrische Sicherheitseinrichtung kann beispielsweise mindestens einen Ladeschütz, mindestens eine Sicherung, einen Spannungsmesser und/oder einen Strommesser aufweisen. Das mindestens eine Gerät 44 kann alternativ oder zusätzlich eine Ladesteckdose zum Anschließen eines elektrischen Ladekabels zum Laden des Energiespeichers 16 aufweisen.

Die Verkleidungsteile 20, 22 können zwischen einer Vorderachse und einer Hinterachse des Kraftfahrzeugs 10 angeordnet sein. Die Verkleidungsteile 20, 22 können bezüglich einer Vorwärtsfahrtrichtung des Kraftfahrzeugs 10 hinter einem Kotflügel für die Vorderachse und/oder vor einem Kotflügel für die Hinterachse angeordnet sein.

Die Verkleidungsteile 20, 22 decken jeweils einen Abschnitt einer Außenseite (z. B. Außenlängsseite, wie Fahrerlängsseite oder Beifahrerlängsseite) der Crashstruktur 18 ab. Die Außenseite ist von dem Energiespeicher 16 abgewandt bzw. nach außen gewandt.

Im Einzelnen deckt das erste bzw. obere Verkleidungsteil 20 einen oberen, streifenförmigen Abschnitt der Außenseite der Crashstruktur 18 ab bzw. verkleidet diese. Der obere Abschnitt kann beispielsweise die Profilbahn 24 und/oder 26 aufweisen. Der obere Abschnitt kann beispielsweise eine Höhe zwischen 1/5 und 1/2 einer Gesamthöhe der Crashstruktur 18 aufweisen, vorzugsweise rund 1/3 der Gesamthöhe.

Das zweite bzw. untere Verkleidungsteil 22 deckt einen unteren, streifenförmigen Abschnitt der Crashstruktur 18 ab bzw. verkleidet diesen. Der untere Abschnitt kann beispielsweise die Profilbahn 32 und/oder 34 aufweisen. Der untere Abschnitt kann beispielsweise eine Höhe zwischen 1/5 und 1/2 einer Gesamthöhe der Crashstruktur 18 aufweisen, vorzugsweise rund 1/3 der Gesamthöhe.

Die Verkleidungsteile 20, 22 können parallel, übereinander und vorzugsweise beabstandet voneinander angeordnet sein. Beispielsweise kann ein mittlerer Abschnitt der Außenseite der Crashstruktur bezüglich einer Hochachse zwischen den Verkleidungsteilen 20 und 22 angeordnet sein. Der mittlere Abschnitt kann nicht von den Verkleidungsteilen 20 und 22 verkleidet sein. Der mittlere Abschnitt kann beispielsweise die Profilbahn 28 und/oder 30 aufweisen. Der mittlere Abschnitt kann beispielsweise eine Höhe zwischen 100 mm und 300 mm aufweisen bzw. ein Abstand zwischen den Verkleidungsteilen 20 und 22 kann beispielsweise zwischen 100 mm und 300 mm betragen.

Die Verkleidungsteile 20, 22 können sich jeweils entlang einer gesamten Länge der Außenseite bzw. der Crashstruktur 18 erstrecken, z. B. parallel zu den Profilbahnen 24 - 34 oder parallel zu einer Längsachse der Crashstruktur 18 oder des Kraftfahrzeugs 10.

Die Verkleidungsteile 20, 22 können sich im Wesentlichen parallel zu einer Längsachse des Kraftfahrzeugs 10 erstrecken. Vorzugsweise sind die Verkleidungsteile 20, 22 auf Höhe einer Vorderachse, einer Hinterachse und/oder des Fahrzeugrahmens 14 des Kraftfahrzeugs 10 angeordnet. Vorteilhaft sind die Verkleidungsteile 20, 22 in einer Vertikalebene ausgerichtet bzw. liegen in einer Vertikalebene. Besonders bevorzugt liegen die Verkleidungsteile 20, 22 in einer gemeinsamen vertikalen Ausrichtungsebene, die beispielsweise parallel zu einer Längsachse des Kraftfahrzeugs 10 verläuft bzw. senkrecht zu einer Querachse des Kraftfahrzeugs 10 verläuft.

Die Verkleidungsteile 20, 22 sind streifenförmig, vorzugsweise mit einer im Wesentlichen horizontal ausgerichteten Längserstreckungsrichtung. Zusätzlich können die Verkleidungsteile 20, 22 bevorzugt rechteckförmig sein. Die Verkleidungsteile 20, 22 können als Planken ausgeführt sind. Die Verkleidungsteile 20, 22 können als Gleichteile ausgeführt sein und beispielsweise auf Umschlag verwendet werden, wie dargestellt ist. Bevorzugt sind die Verkleidungsteile 20, 22 als Strangprofile, z. B. Alu-Strangprofile, ausgeführt.

Die Verkleidungsteile 20, 22 weisen jeweils eine planare (bzw. glatte oder ebene) Außenseite auf. Die Außenseite ist von der profilierten Crashstruktur 18 bzw. der Außenseite der Crashstruktur 18 abgewandt.

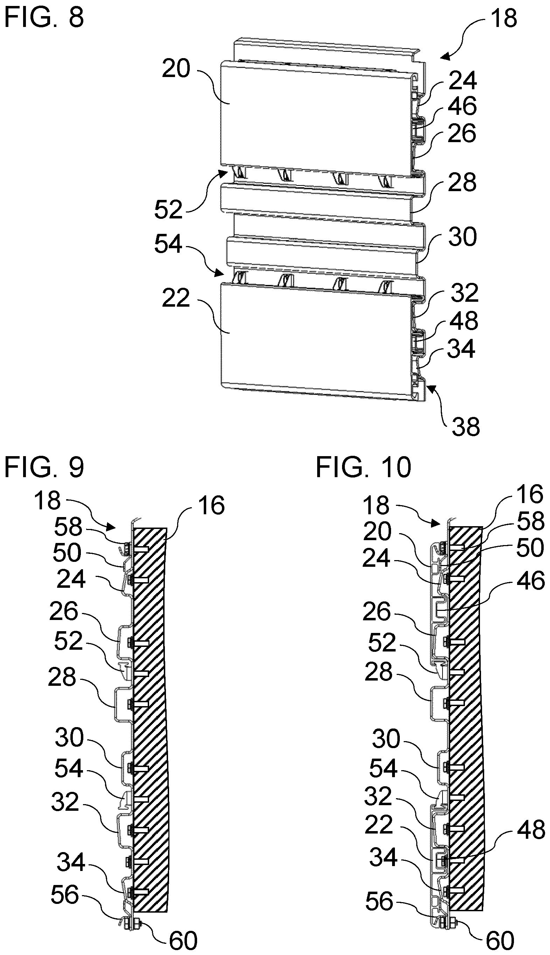

Die Innenseiten bzw. Rückseiten der Verkleidungsteile 20, 22 können an die profilierte Crashstruktur 18 angepasst sein. Die Innenseiten sind der profilierten Crashstruktur 18 bzw. der Außenseite der Crashstruktur 18 zugewandt. Wie beispielsweise aus Figur 10 ersichtlich ist, können die Innenseiten der Verkleidungsteile 20, 22 profiliert sein. Die profilierten Innenseiten können mit der profilierten Crashstruktur 18 ineinandergreifen.

Wie beispielsweise in Figur 10 dargestellt ist, kann die Innenseite des ersten Verkleidungsteils 20 eine Profilbahn 46 aufweisen und/oder die Innenseite des zweiten Verkleidungsteils 22 kann eine Profilbahn 48 aufweisen. Die Profilbahnen 46 und 48 können parallel zueinander verlaufen. Die Profilbahn 46 und/oder 48 kann parallel zu den Profilbahnen 24 - 34 verlaufen. Die Profilbahn 46 kann zwischen den Profilbahnen 24 und 28 angeordnet sein. Die Profilbahn 48 kann zwischen den Profilbahnen 32 und 34 angeordnet sein.

Es ist möglich, dass die Profilbahn 46 und/oder 48 mindestens eine Aussparung (z. B. eine Nut, einen Längskanal entlang der Profilbahn und/oder eine Vertiefung) für einen Abschnitt eines Befestigungselements, z. B. einen Schraubenkopf einer Schraube, aufweist, wobei das Befestigungselement die Crashstruktur 18 an dem Energiespeicher 16 (z. B. ein Gehäuse davon) befestigt (siehe z. B. Figur 10).

Wie beispielhaft in den Figuren 5 bis 10 dargestellt ist, können die Verkleidungsteile 20, 22 mit mindestens einer Halterung 50, 52, 54, 56 an der Crashstruktur 18 angebracht bzw. gehalten sein. Beispielsweise kann das erste Verkleidungsteil 20 von den Halterungen 50, 52 gehalten sein. Das zweite Verkleidungsteil 22 kann von den Halterungen 54, 56 gehalten sein. Die Halterungen 50 und 56 können als Gleichteile ausgeführt sein. Die Halterungen 52 und 54 können als Gleichteile ausgeführt sein.

Die Halterungen 50, 56 können jeweils zum Halten des ersten bzw. zweiten Verkleidungsteils 20, 22 gekröpft sein. Bevorzugt kann die Halterung 50 in entgegengesetzte Richtungen gekröpft sein, vorzugsweise jeweils nach unten und nach oben, besonders bevorzugt jeweils mehrfach und abwechselnd. Das erste Verkleidungsteil 20 kann in die Halterung 50 seitlich bzw. parallel zur Längsachse der Verkleidungsteile 20, 22 / der Crashstruktur 18 einschiebbar sein, vorzugsweise derart, dass im Wesentlichen nur ein Bewegungsfreiheitsgrad in der Einschubrichtung besteht. Dies kann beispielsweise durch die Kröpfungen der Halterung 50 erreicht werden. Auf entsprechende Weise kann das zweite Verkleidungsteil 22 in die Halterung 56 seitlich bzw. parallel zur Längsachse der Verkleidungsteile 20, 22 / der Crashstruktur 18 einschiebbar sein.

Die Halterungen 50, 56 können jeweils an der Crashstruktur 18 angebracht sein, vorzugsweise mittels Schraubverbindung(en). Besonders bevorzugt bringen die Befestigungselemente 58, 60, die die Halterungen 50, 56 an der Crashstruktur 18 anbringen, zumindest teilweise gleichzeitig die Crashstruktur 18 an dem Energiespeicher 16 bzw. dessen Gehäuse an. Es ist bevorzugt, dass die Halterungen 50, 56 bereits fest an der Crashstruktur 18 angebracht sind, wenn das Verkleidungsteil 20 bzw. 22 eingeschoben wird. Nach dem Einschieben können die Halterungen 50, 56 von den Verkleidungsteilen 20, 22 verkleidet bzw. verdeckt sein.

Die Innenseite des ersten Verkleidungsteils 20 kann die gekröpfte Halterung 50 umgreifen und sich zudem an der gekröpften Halterung 50, bevorzugt einer vertikalen Fläche der gekröpften Halterung 50, abstützen. Die Innenseite des zweiten Verkleidungsteils 22 kann die gekröpfte Halterung 56 umgreifen und sich zudem an der gekröpften Halterung 56 abstützen.

Wie beispielsweise der Figur 10 zu entnehmen ist, ist es ebenfalls besonders bevorzugt, dass sich die Innenseiten die Verkleidungsteile 20 bzw. 22 im Crashfall direkt an Abschnitten der Befestigungselemente 58 bzw. 60 abstützen können, wenn die Verkleidungsteile 20 bzw. 22 nach innen gedrückt werden. Im Einzelnen kann sich die Innenseite des ersten Verkleidungsteils 20 an den Stirnflächen der Schraubenköpfe der als Schrauben ausgeführten Befestigungselemente 58 im Crashfall abstützen. Die Innenseite des zweiten Verkleidungsteils 22 wiederum kann sich an den Stirnflächen der Schraubenköpfe der als Schrauben ausgeführten Befestigungselemente 60 im Crashfall abstützten.

Die Halterungen 52, 54 können mehrere Halteelemente aufweisen. Die Haltelemente können jeweils in einer Reihe angeordnet sein können, z. B. parallel zur Längsachse der Verkleidungsteile 20, 22 bzw. der Crashstruktur 18. Das erste Verkleidungsteil 20 kann in die Haltelemente der Halterung 52 seitlich bzw. parallel zur Längsachse der Verkleidungsteile 20, 22 / der Crashstruktur 18 einschiebbar sein, vorzugsweise derart, dass im Wesentlichen nur ein Bewegungsfreiheitsgrad in der Einschubrichtung besteht. Dies kann beispielsweise durch eine Schwalbenschwanzkonfiguration bzw. -verbindung zwischen der Halterung 50 und dem ersten Verkleidungsteil 20 erreicht werden. Auf entsprechende Weise kann das zweite Verkleidungsteil 22 in die Haltelemente der Halterung 54 seitlich bzw. parallel zur Längsachse der Verkleidungsteile 20, 22 / der Crashstruktur 18 einschiebbar sein. Die Nutzung einer Schwalbenschwanzverbindung kann eine besonders flachbauende Verbindung von der Verkleidungsteile 20, 22 und der Crashstruktur 18 ermöglichen.

Die Haltelemente der Halterungen 52, 54 können jeweils an der Crashstruktur 18 angebracht sein, vorzugsweise mittels Schraubverbindung(en). Besonders bevorzugt bringen die Befestigungselemente, die die Halterungen 52, 54 an der Crashstruktur 18 anbringen, zumindest teilweise gleichzeitig die Crashstruktur 18 an dem Energiespeicher 16 bzw. dessen Gehäuse an. Es ist ebenfalls bevorzugt, dass die Halterungen 52, 54 noch nicht angezogen bzw. fest an der Crashstruktur 18 angebracht sind, wenn das Verkleidungsteil 20 bzw. 22 eingeschoben wird und erst nach dem Einschieben festgezogen werden.

Die Innenseite des ersten Verkleidungsteils 20 kann die Halterung 52 umgreifen und sich an dieser abstützen. Die Innenseite des zweiten Verkleidungsteils 22 kann die Halterung 54 umgreifen und sich zudem an dieser abstützen.

Alternativ oder zusätzlich zum Einschieben der Verkleidungsteile 20, 22 kann es beispielsweise möglich sein, dass die Verkleidungsteile 20, 22 in entsprechende Halterungen an der Crashstruktur 18 eingehängt werden.

Die Halterungen 50 - 56 können in Tälern zwischen den Profilbahnen 24 - 32 angeordnet sein. Im Einzelnen kann die Halterung 50 oberhalb von der Profilbahn 24 angeordnet sein. Die Halterung 52 kann zwischen den Profilbahnen 26 und 28 angeordnet sein. Die Halterung 54 kann zwischen den Profilbahnen 30 und 32 angeordnet sein. Die Halterung 56 kann unterhalb der Profilbahn 34 angeordnet sein.

Der Figur 10 ist ferner zu entnehmen, dass die Verbindung der Verkleidungsteile 20, 22 mit der Crashstruktur 18 derart flachbauend sein kann, dass die planaren Außenseiten der Verkleidungsteile 20, 22 im Wesentlichen in einer Vertikalebene mit (oder sogar zurückversetzt) zu einer Dachfläche der hervorstehendsten, für den maximalen Crashfall ausgelegten Profilbahn 28 der Crashstruktur 18 sein können. Die Verkleidungsteile 20, 22 verbreitern das Fahrzeug somit nicht. Dies kann durch unterschiedliche Maßnahmen erreicht werden, z. B.:
- Anpassen der Innenseiten der Verkleidungsteile 20, 22 an die Außenseite der Crashstruktur 18 mit deren Profilbahnen 24, 26, 32, 34;
- Anordnung der Halterungen 50 - 56 in Tälern zwischen den Profilbahnen 24 - 32;
- Schwalbenschwanz-Halterungen 52, 54; und/oder
- Gekröpfte Halterungen 50, 56.

In den Figuren 1 bis 4 ist ferner dargestellt, dass weitere Verkleidungsteile 62, 64, 66 und/oder 68 umfasst sein können. Die weiteren Verkleidungsteile 62, 64, 66, 68 können bezüglich einer Längsachse des Kraftfahrzeugs 10 bzw. der Crashstruktur 18 jeweils versetzt zu der Crashstruktur 18 angeordnet sein.

Die weiteren Verkleidungsteile 62, 64, 66, 68 können als Verlängerung der Verkleidungsteile 20 bzw. 22 angeordnet sein. Im Einzelnen kann das dritte Verkleidungsteil 62 das erste Verkleidungsteil 20 in einer Vorwärtsfahrtrichtung des Kraftfahrzeugs 10 verlängern. Das vierte Verkleidungsteil 64 kann das zweite Verkleidungsteil 22 in einer Vorwärtsfahrtrichtung des Kraftfahrzeugs 10 verlängern. Das fünfte Verkleidungsteil 66 kann das erste Verkleidungsteil 20 entgegen einer Vorwärtsfahrtrichtung des Kraftfahrzeugs 10 verlängern. Das sechste Verkleidungsteil 68 kann das zweite Verkleidungsteil 22 entgegen einer Vorwärtsfahrtrichtung des Kraftfahrzeugs 10 verlängern.

Die weiteren Verkleidungsteile 62, 64 können zwischen einer Vorderachse des Kraftfahrzeugs 10 und den Verkleidungsteilen 20, 22 angeordnet sein. Die weiteren Verkleidungsteile 66, 68 können zwischen einer Hinterachse des Kraftfahrzeugs 10 und den Verkleidungsteilen 20, 22 angeordnet sein.

Die weiteren Verkleidungsteile 62 - 68 können beispielsweise über Träger an dem Fahrzeugrahmen 14 angebracht sein. Die weiteren Verkleidungsteile 62 - 68 können weitere Komponenten verkleiden, z. B. eine Druckluftanlage 70 des Kraftfahrzeugs 10, wie für die weiteren Verkleidungsteile 62 und 64 beispielhaft dargestellt ist.

Die weiteren Verkleidungsteile 62, 64, 66, 68 können streifenförmig sein und eine planare Außenseite aufweisen, die nach außen bzw. weg von dem Fahrzeugrahmen 14 gewandt ist. Bevorzugt können die weiteren Verkleidungsteile 62, 64, 66, 68 damit als Unterfahrschutz des Kraftfahrzeugs 10 ausgeführt sein.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls in den Schutzbereich fallen Der Schutzbereich der Erfindung ist nur durch den Gegenstand der beigefügten Ansprüche definiert und beschränkt.

### Bezugszeichenliste

- 10: Kraftfahrzeug
- 12: Aufbau
- 14: Fahrzeugrahmen
- 16: Energiespeicher
- 18: Crashstruktur
- 20: Erstes Verkleidungsteil
- 22: Zweites Verkleidungsteil
- 24 - 34: Profilbahn
- 36: Umgebungserfassungssensor
- 38: Überstehender Abschnitt
- 40: Stützkonstruktion
- 42: Rippen
- 44: Gerät
- 46: Profilbahn
- 48: Profilbahn
- 50: Halterung
- 52: Halterung
- 54: Halterung
- 56: Halterung
- 58: Befestigungselement
- 60: Befestigungselement
- 62: Drittes Verkleidungsteil
- 64: Viertes Verkleidungsteil
- 66: Fünftes Verkleidungsteil
- 68: Sechstes Verkleidungsteil
- 70: Druckluftanlage

## Patentansprüche

1. Vorrichtung für ein Kraftfahrzeug (10), vorzugsweise ein Nutzfahrzeug, aufweisend:
einen Energiespeicher (16), vorzugsweise eine Traktionsbatterie oder einen Kraftstofftank;
eine Crashstruktur (18), die profiliert ist, eine Außenseite des Energiespeichers (16) schützend abdeckt und dazu ausgebildet ist, sich bei einem Aufprall unter Energieabbau vorbestimmt zu verformen,
wobei die Vorrichtung **dadurch gekennzeichnet ist, dass** sie weiterhin umfasst:
ein erstes Verkleidungsteil (20), das streifenförmig ist, einen oberen streifenförmigen Abschnitt einer von dem Energiespeicher (16) abgewandten Außenseite der Crashstruktur (18) verkleidet und eine planare Außenseite, die der Crashstruktur (18) abgewandt ist, aufweist; und
ein zweites Verkleidungsteil (22), das streifenförmig ist, einen unteren streifenförmigen Abschnitt der Außenseite der Crashstruktur (18) verkleidet und eine planare Außenseite, die der Crashstruktur (18) abgewandt ist, aufweist.

2. Vorrichtung nach Anspruch 1, wobei:
das erste Verkleidungsteil (20) und/oder das zweite Verkleidungsteil (22) eine der Außenseite der Crashstruktur (18) zugewandte Innenseite aufweist, die an die Crashstruktur (18) angepasst ist; und/oder
die planare Außenseite des ersten Verkleidungsteils (20) und/oder die planare Außenseite des zweiten Verkleidungsteils (22) im Wesentlichen in einer Vertikalebene mit oder zurückversetzt zu einer Dachfläche einer hervorstehenden Profilbahn (28) der Crashstruktur (18) ist.

3. Vorrichtung nach Anspruch 1 oder Anspruch 2, wobei:
die Innenseite des ersten Verkleidungsteils (20) und/oder des zweiten Verkleidungsteils (22) profiliert ist, vorzugsweise angepasst an die und/oder abwechselnd mit der Crashstruktur (18); und/oder
die Innenseite des ersten Verkleidungsteils (20) und/oder des zweiten Verkleidungsteils (22) und die Crashstruktur (18) ineinandergreifen, wobei vorzugsweise eine Profilbahn (46, 48) der Innenseite zwischen zwei Profilbahnen (24, 26; 32, 34) der Crashstruktur (18) angeordnet ist.

4. Vorrichtung nach einem der vorherigen Ansprüche, wobei:
das erste Verkleidungsteil (20) und das zweite Verkleidungsteil (22) parallel sind, vertikal ausgerichtet sind, beabstandet zueinander angeordnet sind und/oder sich im Wesentlichen entlang einer gesamten Länge der Außenseite der Crashstruktur (18) erstrecken.

5. Vorrichtung nach einem der vorherigen Ansprüche, ferner aufweisend:
mindestens eine Halterung (50, 52, 54, 56), die das erste Verkleidungsteil (20) und/oder das zweite Verkleidungsteil (22) an der Crashstruktur (18) hält.

6. Vorrichtung nach Anspruch 5, wobei:
das erste Verkleidungsteil (20) und/oder das zweite Verkleidungsteil (22) in die mindestens eine Halterung (50, 52, 54, 56) eingeschoben ist, vorzugweise mittels einer Schwalbenschwanzverbindung und/oder Kröpfungsverbindung, sodass bevorzugt eine flachbauende Kombination aus dem ersten und/oder zweiten Verkleidungsteil (20, 22) und der Crashstruktur (18) bereitgestellt ist; und/oder
das erste Verkleidungsteil (20) und/oder das zweite Verkleidungsteil (22) an der mindestens einen Halterung (50, 52, 54, 56) eingehängt ist.

7. Vorrichtung nach Anspruch 5 oder Anspruch 6, wobei:
das erste Verkleidungsteil (20) und/oder das zweite Verkleidungsteil (22) die mindestens eine Halterung (50, 56) abdeckt.

8. Vorrichtung nach einem der Ansprüche 5 bis 7, wobei:
die mindestens eine Halterung (50, 56) mindestens eine Kröpfung, vorzugsweise mindestens zwei Kröpfungen in entgegengesetzte Richtungen, aufweist,
wobei bevorzugt eine Kröpfung der jeweiligen Halterung (50, 56) mit dem ersten oder zweiten Verkleidungsteil (20, 22) ineinandergreift und eine andere Kröpfung der jeweiligen Halterung (50, 56) das erste oder zweite Verkleidungsteils (20, 22) flächig abstützt.

9. Vorrichtung nach einem der Ansprüche 5 bis 8, wobei:
die mindestens eine Halterung (50, 52, 54, 56) in mindestens einem Talabschnitt angrenzend an eine Profilbahn (24, 34) der Crashstruktur (18) oder zwischen zwei Profilbahnen (26, 28; 30, 32) der Crashstruktur (18) angeordnet ist.

10. Vorrichtung nach einem der vorherigen Ansprüche, ferner aufweisend:
mehrere Befestigungselemente (58, 60), vorzugsweise eine Schraubenreihe, die die Crashstruktur (18) an dem Energiespeicher (16) befestigt und/oder das erste Verkleidungsteil (20) und/oder das zweite Verkleidungsteil (22) an der Crashstruktur (18) befestigt,
wobei das erste Verkleidungsteil (20) und/oder das zweite Verkleidungsteil (22) die mehreren Befestigungselement (58, 60) abdeckt.

11. Vorrichtung nach einem der vorherigen Ansprüche, ferner aufweisend:
mindestens ein weiteres Verkleidungsteil (62, 64, 66, 68), das versetzt zu der Crashstruktur (18) als eine Verlängerung des ersten Verkleidungsteils (20) und/oder des zweiten Verkleidungsteils (22) angeordnet ist, streifenförmig ist und eine planare Außenseite aufweist.

12. Vorrichtung nach Anspruch 11, wobei:
das mindestens eine weitere Verkleidungsteil (62, 64, 66, 68) als ein Unterfahrschutz angeordnet ist; und/oder
das mindestens eine weitere Verkleidungsteil (62, 64, 66, 68) in einer Ansicht auf die Außenseite der Crashstruktur (18) versetzt neben der Außenseite der Crashstruktur (18) angeordnet ist.

13. Vorrichtung nach Anspruch 11 oder Anspruch 12, wobei das mindestens eine weitere Verkleidungsteil (62, 64, 66, 68) aufweist:
ein drittes Verkleidungsteil (62), das als eine Verlängerung des ersten Verkleidungsteils (20) angeordnet ist; und
ein viertes Verkleidungsteil (64), das als eine Verlängerung des zweiten Verkleidungsteils (22) angeordnet ist,
wobei das mindestens eine weitere Verkleidungsteil (62, 64, 66, 68) bevorzugt ferner aufweist:
ein fünftes Verkleidungsteil (66), das auf einer zum dritten Verkleidungsteil (62) entgegengesetzten Seite des ersten Verkleidungsteils (20) als eine Verlängerung des ersten Verkleidungsteils (20) angeordnet ist, und/oder
ein sechstes Verkleidungsteil (68), das auf einer zum vierten Verkleidungsteil (64) entgegengesetzten Seite des zweiten Verkleidungsteils (22) als eine Verlängerung des zweiten Verkleidungsteils (22) angeordnet ist.

14. Vorrichtung nach einem der vorherigen Ansprüche, wobei:
das erste Verkleidungsteil (20) und das zweite Verkleidungsteil (22) als Gleichteile ausgeführt sind; und/oder
die Crashstruktur (18) mehrere Profilbahnen (24, 26, 28, 30, 32, 34) aufweist, die vorzugsweise:
- übereinander angeordnet sind; und/oder
- sich im Wesentlichen parallel zueinander erstrecken; und/oder
- jeweils einen U-förmigen, V-förmigen oder wellenförmigen Querschnitt aufweisen, besonders bevorzugt in einer Ebene quer zu einer Längserstreckungsrichtung der mehreren Profilbahnen (24, 26, 28, 30, 32, 34).

15. Kraftfahrzeug (10), vorzugsweise Nutzfahrzeug, aufweisend:
eine Vorderachse;
eine Hinterachse;
einen Fahrzeugrahmen (14), vorzugsweise Leiterrahmen; und
eine Vorrichtung nach einem der vorherigen Ansprüche, wobei die Vorrichtung zwischen der Vorderachse und der Hinterachse angeordnet und/oder an dem Fahrzeugrahmen (14) befestigt ist, vorzugsweise auf einer Höhe mit der Vorderachse und der Hinterachse.

## Claims

1. A device for a motor vehicle (10), preferably a utility vehicle, comprising:
an energy storage (16), preferably a traction battery or a fuel tank;
a crash structure (18) which is profiled, covers an outer side of the energy storage (16) in a protective manner and is configured to deform in a predetermined manner with energy dissipation in the event of an impact,
wherein the device is **characterized in that** it further comprises:
a first covering member (20) which is strip-shaped, covers an upper strip-shaped section of an outer side of the crash structure (18) facing away from the energy storage (16), and comprises a planar outer side facing away from the crash structure (18); and
a second covering member (22), which is strip-shaped, covers a lower strip-shaped section of the outer side of the crash structure (18) and comprises a planar outer side facing away from the crash structure (18).

2. The device according to claim 1, wherein:
the first covering member (20) and/or the second covering member (22) comprises an inner side facing the outer side of the crash structure (18), which is adapted to the crash structure (18); and/or
the planar outer side of the first covering member (20) and/or the planar outer side of the second covering member (22) is substantially in a vertical plane with or set back from a roof surface of a protruding profile web (28) of the crash structure (18).

3. The device according to claim 1 or claim 2, wherein:
the inner side of the first covering member (20) and/or the second covering member (22) is profiled, preferably adapted to and/or alternating with the crash structure (18); and/or
the inner side of the first covering member (20) and/or of the second covering member (22) and the crash structure (18) engage with each other, preferably a profile web (46, 48) of the inner side being arranged between two profile webs (24, 26; 32, 34) of the crash structure (18).

4. The device according to any one of the previous claims, wherein:
the first covering member (20) and the second covering member (22) are parallel, are vertically aligned, are arranged spaced apart from each other and/or extend substantially along an entire length of the outer side of the crash structure (18).

5. The device according to any of the previous claims, further comprising:
at least one holder (50, 52, 54, 56) holding the first covering member (20) and/or the second covering member (22) at the crash structure (18).

6. The device according to claim 5, wherein:
the first covering member (20) and/or the second covering member (22) is slid into the at least one holder (50, 52, 54, 56), preferably by means of a dovetail joint and/or offset joint, so that preferably a flat-building combination of the first and/or second covering member (20, 22) and the crash structure (18) is provided; and/or
the first covering member (20) and/or the second covering member (22) is suspended from the at least one holder (50, 52, 54, 56).

7. The device according to claim 5 or claim 6, wherein:
the first covering member (20) and/or the second covering member (22) covers the at least one holder (50, 56).

8. The device according to any one of claims 5 to 7, wherein:
the at least one holder (50, 56) comprises at least one offset, preferably at least two offsets in opposite directions,
wherein preferably one offset of the respective holder (50, 56) engages with the first or second covering member (20, 22) and another offset of the respective holder (50, 56) supports the first or second covering member (20, 22) in a planar manner.

9. The device according to any one of claims 5 to 8, wherein:
the at least one holder (50, 52, 54, 56) is arranged in at least one valley section adjacent to a profile web (24, 34) of the crash structure (18) or between two profile webs (26, 28; 30, 32) of the crash structure (18).

10. The device according to any of the previous claims, further comprising:
a plurality of fastening elements (58, 60), preferably a row of screws, fastening the crash structure (18) to the energy storage (16) and/or fastening the first covering member (20) and/or the second covering member (22) to the crash structure (18),
wherein the first covering member (20) and/or the second covering member (22) covers the plurality of fastening elements (58, 60).

11. The device according to any of the previous claims, further comprising:
at least one further covering member (62, 64, 66, 68) arranged offset from the crash structure (18) as an extension of the first covering member (20) and/or the second covering member (22), being strip-shaped and comprising a planar outer side.

12. The device according to claim 11, wherein:
the at least one further covering member (62, 64, 66, 68) is arranged as an underride guard; and/or
the at least one further covering member (62, 64, 66, 68) is arranged offset next to the outer side of the crash structure (18) in a view towards the outer side of the crash structure (18).

13. The device according to claim 11 or claim 12, wherein the at least one further covering member (62, 64, 66, 68) comprises:
a third covering member (62) arranged as an extension of the first covering member (20); and
a fourth covering member (64) arranged as an extension of the second covering member (22),
wherein the at least one further covering member (62, 64, 66, 68) preferably further comprises:
a fifth covering member (66) arranged on a side of the first covering member (20) opposite to the third covering member (62) as an extension of the first covering member (20), and/or
a sixth covering member (68) arranged on a side of the second covering member (22) opposite to the fourth covering member (64) as an extension of the second covering member (22).

14. The device according to any of the previous claims, wherein:
the first covering member (20) and the second covering member (22) are configured as identical parts; and/or
the crash structure (18) comprises a plurality of profile webs (24, 26, 28, 30, 32, 34), which preferably:
- are arranged one above the other; and/or
- extend substantially parallel to one another; and/or
- each have a U-shaped, V-shaped or wave-shaped cross-section, particularly preferably in a plane transverse to a longitudinal direction of extension of the plurality of profile webs (24, 26, 28, 30, 32, 34).

15. A motor vehicle (10), preferably a utility vehicle, comprising:
a front axle;
a rear axle;
a vehicle frame (14), preferably a ladder frame; and
a device according to any of the previous claims, wherein the device is arranged between the front axle and the rear axle and/or fastened to the vehicle frame (14), preferably at a level with the front axle and the rear axle.

## Revendications

1. Dispositif pour un véhicule automobile (10), de préférence un véhicule utilitaire, comprenant :
un accumulateur d'énergie (16), de préférence une batterie de traction ou un réservoir de carburant ;
une structure de collision (18), qui est profilée, qui recouvre de manière protectrice une face extérieure de l'accumulateur d'énergie (16) et qui est conçue pour se déformer de manière prédéterminée en cas de choc avec dissipation d'énergie,
le dispositif étant **caractérisé en ce qu'**il comprend en outre :
une première pièce d'habillage (20) qui est en forme de bande, qui habille une partie supérieure en forme de bande d'une face extérieure de la structure de collision (18) opposée à l'accumulateur d'énergie (16) et qui présente une face extérieure plane opposée à la structure de collision (18) ; et
une deuxième pièce d'habillage (22) qui est en forme de bande, qui habille une partie inférieure en forme de bande de la face extérieure de la structure de collision (18) et qui présente une face extérieure plane qui est opposée à la structure de collision (18).

2. Dispositif selon la revendication 1, dans lequel :
la première pièce d'habillage (20) et/ou la deuxième pièce d'habillage (22) présente une face intérieure tournée vers la face extérieure de la structure de collision (18), qui est adaptée à la structure de collision (18) ; et/ou
la face extérieure plane de la première pièce d'habillage (20) et/ou la face extérieure plane de la deuxième pièce d'habillage (22) est sensiblement dans un plan vertical avec une surface de toit d'une bande profilée (28) en saillie de la structure de collision (18), ou en retrait de cette surface de toit.

3. Dispositif selon la revendication 1 ou la revendication 2, dans lequel :
la face intérieure de la première pièce d'habillage (20) et/ou de la deuxième pièce d'habillage (22) est profilée, de préférence adaptée à la structure de collision (18) et/ou de manière alternée avec celle-ci ; et/ou
la face intérieure de la première pièce d'habillage (20) et/ou de la deuxième pièce d'habillage (22) et la structure de collision (18) s'interpénètrent, une bande profilée (46, 48) de la face intérieure étant de préférence disposée entre deux bandes profilées (24, 26 ; 32, 34) de la structure de collision (18).

4. Dispositif selon l'une des revendications précédentes, dans lequel :
la première pièce d'habillage (20) et la deuxième pièce d'habillage (22) sont parallèles, alignées verticalement, espacées et/ou s'étendent sensiblement sur toute une longueur de la face externe de la structure de collision (18).

5. Dispositif selon l'une des revendications précédentes, comprenant en outre :
au moins un support (50, 52, 54, 56) maintenant la première pièce d'habillage (20) et/ou la deuxième pièce d'habillage (22) sur la structure de collision (18).

6. Dispositif selon la revendication 5, dans lequel :
la première pièce d'habillage (20) et/ou la deuxième pièce d'habillage (22) est insérée dans ledit au moins un support (50, 52, 54, 56), de préférence au moyen d'une liaison en queue d'aronde et/ou d'une liaison par des décrochements, de sorte qu'une combinaison à structure plate de la première et/ou de la deuxième pièce d'habillage (20, 22) et de la structure de collision (18) est de préférence réalisée ; et/ou
la première pièce d'habillage (20) et/ou la deuxième pièce d'habillage (22) est accrochée audit au moins un support (50, 52, 54, 56).

7. Dispositif selon la revendication 5 ou la revendication 6, dans lequel :
la première pièce d'habillage (20) et/ou la deuxième pièce d'habillage (22) recouvre ledit au moins un support (50, 56).

8. Dispositif selon l'une des revendications 5 à 7, dans lequel :
ledit au moins un support (50, 56) présente au moins un décrochement, de préférence au moins deux décrochements dans des directions opposées,
de préférence, un décrochement de chaque support (50, 56) s'emboîtant avec la première ou la deuxième pièce d'habillage (20, 22), et un autre décrochement de chaque support (50, 56) supportant à plat la première ou la deuxième pièce d'habillage (20, 22).

9. Dispositif selon l'une des revendications 5 à 8, dans lequel :
ledit au moins un support (50, 52, 54, 56) est disposé dans au moins une portion de vallée adjacente à une bande profilée (24, 34) de la structure de collision (18) ou entre deux bandes profilées (26, 28 ; 30, 32) de la structure de collision (18).

10. Dispositif selon l'une des revendications précédentes, comprenant en outre :
plusieurs éléments de fixation (58, 60), de préférence une rangée de vis, qui fixent la structure de collision (18) à l'accumulateur d'énergie (16) et/ou qui fixent la première pièce d'habillage (20) et/ou la deuxième pièce d'habillage (22) à la structure de collision (18),
la première pièce d'habillage (20) et/ou la deuxième pièce d'habillage (22) recouvrant la pluralité d'éléments de fixation (58, 60).

11. Dispositif selon l'une des revendications précédentes, comprenant en outre :
au moins une autre pièce d'habillage (62, 64, 66, 68), décalée par rapport à la structure de collision (18) pour constituer un prolongement de la première pièce d'habillage (20) et/ou de la deuxième pièce d'habillage (22), ayant la forme d'une bande et présentant une face extérieure plane.

12. Dispositif selon la revendication 11, dans lequel :
ladite au moins une autre pièce d'habillage (62, 64, 66, 68) est agencée en tant que protection anti-encastrement ; et/ou
ladite au moins une autre pièce d'habillage (62, 64, 66, 68) est agencée de manière décalée à côté de la face extérieure de la structure de collision (18) selon une vue de la face extérieure de la structure de collision (18) .

13. Dispositif selon la revendication 11 ou la revendication 12, dans lequel ladite au moins une autre pièce d'habillage (62, 64, 66, 68) comprend :
une troisième pièce d'habillage (62) agencée en tant que prolongement de la première pièce d'habillage (20) ; et
une quatrième pièce d'habillage (64) agencée en tant que prolongement de la deuxième pièce d'habillage (22), ladite au moins une autre pièce d'habillage (62, 64, 66, 68) comprenant de préférence en outre :
une cinquième pièce d'habillage (66) agencée sur un côté de la première pièce d'habillage (20) opposé à la troisième pièce d'habillage (62) en tant que prolongement de la première pièce d'habillage (20), et/ou
une sixième pièce d'habillage (68) disposée sur un côté de la deuxième pièce d'habillage (22) opposé à la quatrième pièce d'habillage (64), en tant que prolongement de la deuxième pièce d'habillage (22).

14. Dispositif selon l'une des revendications précédentes, dans lequel :
la première pièce d'habillage (20) et la deuxième pièce d'habillage (22) sont réalisées sous forme de pièces identiques ; et/ou
la structure de collision (18) comporte plusieurs bandes profilées (24, 26, 28, 30, 32, 34), qui, de préférence :
- sont disposées les unes au-dessus des autres ; et/ou
- s'étendent sensiblement parallèlement les unes aux autres ; et/ou
- présentent chacune une section transversale en forme de U, de V ou d'onde, de préférence dans un plan transversal à une direction d'extension longitudinale de la pluralité de bandes profilées (24, 26, 28, 30, 32, 34) .

15. Véhicule automobile (10), de préférence véhicule utilitaire, comprenant :
un essieu avant ;
un essieu arrière ;
un châssis de véhicule (14), de préférence un châssis en échelle ; et
un dispositif selon l'une des revendications précédentes, ledit dispositif étant disposé entre l'essieu avant et l'essieu arrière et/ou fixé au châssis (14) du véhicule, de préférence au même niveau que l'essieu avant et l'essieu arrière.
